Europäisches Patentamt

**European Patent Office**

Office européen des brevets

(11) Numéro de publication : **0 070 069
B1**

(12) # FASCICULE DE BREVET EUROPÉEN

(45) Date de publication du fascicule du brevet :
**21.11.85**

(21) Numéro de dépôt : **82200827.2**

(22) Date de dépôt : **02.07.82**

(51) Int. Cl.⁴ : **F 24 J 2/48, C 23 C 22/50**

(54) **Procédé de fabrication d'un absorbeur sélectif de capteur solaire.**

(30) Priorité : **08.07.81 FR 8113815**

(43) Date de publication de la demande :
**19.01.83 Bulletin 83/03**

(45) Mention de la délivrance du brevet :
**21.11.85 Bulletin 85/47**

(84) Etats contractants désignés :
**DE GB IT SE**

(56) Documents cités :
**DE-C- 556 685
DE-C- 594 962
FR-A- 2 337 320
FR-A- 2 461 211
US-A- 2 639 245
PATENTS ABSTRACTS OF JAPAN, vol. 3, no. 79, 6
juillet 1979, page 26 C-51,**

(73) Titulaire : **ANVAR Agence Nationale de Valorisation
de la Recherche
43, rue Caumartin
F-75436 Paris Cédex 09 (FR)**

(72) Inventeur : **Aries, Lucien
38 Rond-Point des Bleuets
Baziege - F-31450 Montgiscard (FR)**
Inventeur : **Traverse, Jean-Pierre
72 rue de la Fontaine-des-Cerdans
F-31520 Ramonville Saint-Agne (FR)**

(74) Mandataire : **Barre, Philippe
Cabinet Barre-Gatti-Laforgue 95 rue des Amidonniers
F-31069 Toulouse Cédex (FR)**

Jouve, 18, rue St-Denis, 75001 Paris, France

## Description

L'invention concerne un procédé de fabrication d'un absorbeur sélectif de capteur solaire, permettant l'obtention d'une surface de captation des rayonnements solaires à facteur d'absorption élevé et à faible facteur d'émission ; elle s'étend aux absorbeurs sélectifs de capteur solaire, obtenus.

On connaît plusieurs types de procédés consistant à revêtir la surface de captation d'un absorbeur solaire, d'un dépôt noir en vue d'en augmenter le facteur d'absorption et, le cas échéant, d'en réduire le facteur d'émission. Un type de procédé couramment utilisé consiste à enduire la surface d'une peinture appropriée mais ce procédé possède plusieurs inconvénients graves. En premier lieu, il conduit à une surface de captation peu ou non sélective, c'est-à-dire qui possède un facteur d'émission élevé, de sorte qu'une importante partie de l'énergie est perdue par rayonnement, essentiellement dans le domaine de l'infrarouge. En outre, ces revêtements se dégradent généralement à température moyenne ou élevée (souvent à partir de 100 °C environ) au terme d'un certain temps d'utilisation.

Un autre type de procédé consiste à réaliser un dépôt cathodique d'oxydes de chrome, désigné par « noir de chrome », sur la surface de captation. Le bain électrolytique est à base d'acide chromique et le dépôt s'effectue par une électrolyse classique qui conduit à une addition de matière sur la surface. L'inconvénient de ce type de procédé réside dans la complexité et le coût du processus de préparation de la surface de captation appelée à recevoir le revêtement de noir de chrome ; en effet, il est nécessaire d'effectuer au préalable un nickelage de la surface pour obtenir une bonne adhérence de la couche de noir de chrome et une sélectivité satisfaisante. En outre, on observe pour les surfaces ainsi revêtues que le facteur d'absorption décroît à température moyenne ou élevée (à partir de 200 °C).

Un autre type de procédé illustré par exemple par le brevet français publié sous le n° 2.325.002 consiste à utiliser comme surface à traiter un acier inoxydable et à traiter chimiquement cette surface en la plongeant à chaud dans des bains complexes contenant des composés à base de chrome ou de plomb en vue de former un film d'oxydes. Ce type de procédé présente l'inconvénient d'utiliser des bains coûteux et polluants et de conduire à des couches superficielles d'oxydes dont l'épaisseur doit être rigoureusement contrôlée pour obtenir un effet sélectif et dont la stabilité n'est pas assurée à température élevée.

On connaît de plus un autre type de procédé (brevet FR n° 2.337.320) qui consiste à former sur une surface métallique une pellicule constituée uniquement de sulfure du métal de cette surface, en engendrant une réaction superficielle au moyen de soufre ou d'un sulfure ; toutefois, ce procédé donne une couche superficielle de sulfure dont la stabilité physico-chimique est mauvaise ; cet inconvénient est très grave compte tenu des conditions d'emploi sévères des capteurs solaires (atmosphère humide ou corrosive). En outre, les propriétés optiques obtenues, en particulier la sélectivité, sont relativement médiocres et variables dans ces procédés.

Tous les procédés antérieurs décrits plus haut conduisent à ajouter sur la surface, un dépôt, film ou revêtement, qui adhère à celle-ci plus ou moins fermement selon les conditions d'utilisation.

Par ailleurs, on a décrit dans FR-A-2 461 211 déposée au nom du demandeur, un procédé nouveau qui réalise un traitement du matériau lui-même sur une certaine épaisseur à partir de la surface de celui-ci et permet d'obtenir des surfaces d'absorption sélectives ayant un excellent facteur d'absorption et un faible facteur d'émission, tout en bénéficiant d'une stabilité thermique exceptionnelle. Ce procédé consiste à réaliser une oxydation anodique contrôlée d'un alliage ferreux contenant du chrome.

La présente invention se propose d'indiquer un nouveau procédé donnant des performances optiques ayant des valeurs et une stabilité thermique, au moins équivalentes à celles du procédé évoqué ci-dessus, tout en bénéficiant d'une mise en œuvre simplifiée et en supprimant totalement ou quasi totalement la consommation de courant électrique.

Un autre objectif de la présente invention est d'améliorer considérablement la stabilité physico-chimique des surfaces d'absorption et en particulier leur stabilité en présence d'eau.

Un autre objectif est de réaliser un absorbeur apte à travailler dans un domaine de température élevée, sans réduction de la sélectivité ; en particulier, l'invention vise à réaliser des surfaces de captation susceptibles d'être utilisées pour des capteurs solaires travaillant sous rayonnement semi-concentrés et/ou travaillant sous vide.

A cet effet, le procédé de fabrication d'un absorbeur sélectif de capteur solaire conforme à l'invention, permettant d'obtenir une surface de captation à facteur d'absorption élevé et faible facteur d'émission, utilise une surface de captation en un alliage ferreux contenant à l'état allié du chrome ; selon la présente invention, ledit procédé consiste :

à préparer un bain acide contenant des atomes d'oxygène et sous forme dissoute au moins une substance métalloïdique à base de soufre, sélénium et/ou tellure,

à ajuster l'état de la surface de captation de façon à conférer à son potentiel de corrosion naturelle en présence du bain précité, une valeur inférieure à son potentiel de passivation primaire, en vue de porter la surface à l'état actif,

et à engendrer des migrations des atomes métalliques provenant de l'alliage, des migrations des atomes métalloïdiques provenant du bain et des réactions d'interface entre ces éléments, en disposant la surface de captation dans le bain précité, en l'absence de courant électrique imposé à la surface de captation.

Ainsi, le procédé de l'invention conduit à opérer un traitement de conversion chimique de la surface de captation, qui conditionne une modification de la composition chimique d'une épaisseur déterminée de la surface. Le chrome, le fer et les éventuels autres métaux alliés migrent à partir du cœur du matériau vers la surface à des vitesses spécifiques, cependant que les substances métalloïdiques et l'oxygène provenant du milieu migrent en sens inverse à la surface du matériau ; à l'intérieur d'une épaisseur donnée de matière, ces atomes migrants produisent des réactions chimiques qui affectent la partie interne du matériau située au voisinage immédiat de la surface et conduisent à un milieu complexe contenant, d'après les analyses, les éléments métalliques à divers états d'oxydation, sous différentes combinaisons avec la ou les substances métalloïdiques du bain. Il est à noter qu'on observe également l'existence d'un mécanisme complexe de diffusion de certains éléments métalliques vers le bain.

L'épaisseur affectée par les migrations et réactions précitées est en continuité avec le cœur du matériau sans aucun dépôt ou film surajouté. Les essais ont démontré qu'une telle surface d'absorption présentait à la fois d'excellentes qualités optiques, une exceptionnelle stabilité physico-chimique et une stabilité thermique remarquable se traduisant par un maintien et même une amélioration des performances optiques jusqu'à 300 °C (à l'air). Le procédé de l'invention permet ainsi de réaliser des capteurs solaires aptes à travailler sous rayonnements solaires semi-concentrés.

De plus, des essais sous vide à des températures de l'ordre de 400 °C ont montré que les propriétés optiques de la surface sont conservées après plusieurs heures ; ainsi, ces surfaces sont également adaptées pour être utilisées dans des capteurs solaires en tube scellé sous vide, (qui doivent subir de telles températures pendant quelques heures lors de leur fabrication).

Selon un mode de réalisation de mise en œuvre particulièrement simple et de coût réduit, on utilise un bain acide contenant de l'eau notamment un bain acide aqueux, comme milieu contenant des atomes d'oxygène.

Pour améliorer encore la sélectivité et la stabilité physico-chimique de la surface de captation, il est particulièrement avantageux d'ajouter au bain acide un inhibiteur de corrosion spécifique de l'alliage et du bain avec sa substance métalloïdique. Notamment les alcools acétyléniques et éthyléniques donnent d'excellents résultats. Ces inhibiteurs optimisent les vitesses de migration des atomes et les réactions qui se déroulent dans la zone de surface et conduisent, comme on le verra, à des qualités optiques particulièrement intéressantes, associés à une excellente stabilité physico-chimique.

Par ailleurs, on peut avantageusement utiliser comme alliage ferreux un acier ferritique contenant du chrome, stabilisé par addition de niobium ou de titane ; les surfaces obtenues dans ces conditions ne subissent aucune altération au terme de centaines d'heures passées dans un milieu aqueux, ce qui constitue un résultat remarquable.

Il est également possible d'utiliser, entre autres, un acier austénitique contenant du chrome et du nickel.

La substance métalloïdique ajoutée au bien peut être constituée par tout composé de soufre, sélénium ou tellure. D'après les expérimentations menées jusqu'à présent, le soufre paraît donner les meilleurs résultats et la substance disposée dans le bain est de préférence un sulfure ou un thiosulfate.

Le sélénium donne également des résultats satisfaisants en particulier lorsqu'il est utilisé sous forme de sélénium dioxyde ou d'acide sélénieux.

Il est essentiel que le pH du bain soit acide mais la valeur précise de ce pH n'a pas une importance primordiale. En pratique, on utilisera des bains aqueux préparés de façon à contenir en poids au moins 0,1 % d'acide, par exemple acide sulfurique, acide nitrique, acide chlorhydrique, acide acétique...

Par ailleurs, une des conditions essentielles pour obtenir les migrations et réactions précitées réside dans l'ajustement du potentiel de corrosion naturelle de l'alliage plongé dans le bain, potentiel qui soit impérativement être inférieur au potentiel de passivation primaire dudit alliage. Ces potentiels sont des paramètres bien connus de l'homme de l'art qui sait les mesurer. (Il est à noter qu'ils caractérisent un alliage plongé dans un bain donné).

Pour certains alliages, notamment les alliages recuits, blanc brillant, cette condition est souvent remplie naturellement par l'alliage pour les types de bain visés par l'invention. L'ajustement du potentiel de corrosion naturelle se limite alors à un contrôle préalable pour vérifier si cette condition est bien remplie.

D'une façon générale, cet ajustement sera avantageusement réalisé de la façon suivante :

en premier lieu, en effectuant une opération de mesure consistant à mesurer ce potentiel au moyen d'un circuit de mesure possédant une électrode constituée par la surface de captation et une électrode de référence plongée dans le bain,

ensuite, si le potentiel de corrosion naturelle mesurée est supérieur au potentiel de passivation primaire, en effectuant une opération d'activation cathodique consistant à plonger une anode dans le bain et à faire passer un courant entre ladite anode et la surface de captation jouant alors le rôle de cathode,

les opérations de mesure et d'activation cathodique précitées étant renouvelées jusqu'à l'obtention d'un potentiel de corrosion naturelle, inférieur au potentiel de passivation primaire.

L'opération d'activation cathodique ci-dessus décrite engendre sur la surface de captation un dégagement d'hydrogène naissant, qui possède un pouvoir réducteur extrêmement efficace, permettant d'activer la surface, c'est-à-dire de mettre à nu les métaux alliés sans oxydes superficiels ; le potentiel de corrosion naturelle de cette surface devient ainsi très faible (convention française de signe) ce qui permet d'en abaisser la valeur au-dessous du potentiel de passivation primaire, soit par une seule opération d'activation cathodique durant quelques minutes, soit, le cas échéant, par deux ou plusieurs opérations successives avec contrôle du potentiel au terme de chacune de celles-ci.

Pour certains alliages et certains états de surface, le potentiel de corrosion naturelle peut être ajusté par des opérations préalables d'apprêt : décapage, abrasion, dégraissage. Au terme de ces opérations, le potentiel de corrosion naturelle est contrôlé et, le cas échéant, une ou plusieurs opérations d'activation cathodique sont entreprises.

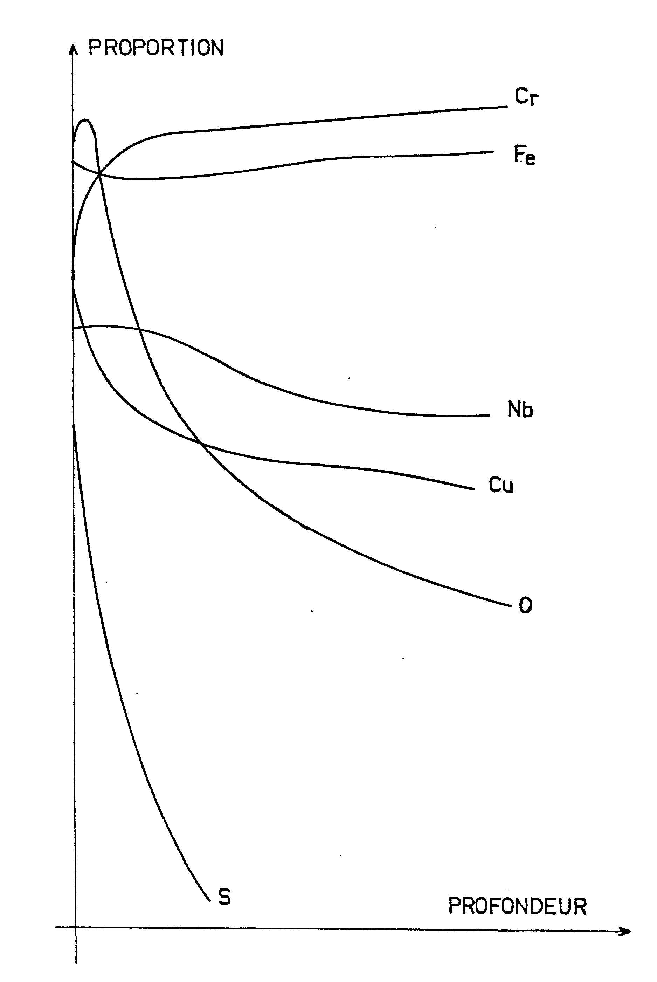

Le procédé de l'invention est illustré ci-après par plusieurs exemples de mises en œuvre ; les résultats obtenus dans l'exemple 1 sont illustrés à la figure du dessin annexé qui présente des courbes donnant la proportion des éléments présents en surface du matériau, en fonction de la profondeur.

Exemple 1

Dans cet exemple, l'absorbeur est réalisé en tôle d'acier inoxydable Z8 C Nb 17 (norme AFNOR) (composition 17 % de chrome, 0,08 % de carbone, 0,5 % de niobium, le pourcentage restant étant du fer).

Le bain de traitement est une solution aqueuse d'acide sulfurique à 18 % en poids d'acide, additionné à 0,1 gramme de soufre par litre sous forme de thiosulfate de sodium $Na_2S_2O_3$, $5H_2O$ et de 1,43 g d'alcool propargylique (propyne 2 ol I : $C_3H_4O$) par litre jouant le rôle d'inhibiteur de corrosion.

Le potentiel de corrosion naturelle de l'alliage dans un tel bain est mesuré au moyen d'un millivoltmètre électriquement relié à l'alliage et à une électrode au calomel saturé ; dans le cas de la tôle visée dans le présent exemple qui avait fait l'objet d'un dégraissage préalable à l'alcool éthylique, le potentiel de corrosion mesuré était égal à − 0,5 volt.

Le potentiel de passivation primaire de cet alliage dans ce bain a été mesuré en traçant au moyen d'un potentiostat la courbe intensité/potentiel de l'alliage ferreux dans le bain (le rôle du potentiostat étant d'imposer à l'anode constituée par l'alliage un potentiel variable par rapport à l'électrode de référence au calomel saturé) ; le potentiel de passivation primaire correspond au sommet du pic d'activité et, dans cet exemple, était égal à + 0,7 volt.

Le potentiel de corrosion naturelle étant donc inférieur, le traitement a pu être effectué directement ; il a consisté à maintenir l'alliage plongé dans le bain pendant 5 minutes à la température ambiante en agitant ce bain.

Après traitement, on obtient une surface d'aspect noir mat présentant une excellente sélectivité comme le montrent les valeurs ci-dessous des facteurs d'absorption $\alpha_s$ (pourcentage global de rayonnement absorbé par rapport au rayonnement solaire incident) et d'émission (pourcentage global du rayonnement émis par rapport à celui du corps noir à la température de 20 °C).

$$\alpha_S = 0,92 \qquad \varepsilon_{20} = 0,13$$

Une microanalyse à la sonde ionique a été réalisée sur un échantillon de la surface ; les courbes de la figure unique du dessin sont les enregistrements obtenus et illustrent les profils de concentration des éléments après migrations et réactions (notons qu'il n'est pas possible d'étalonner de façon simple des axes de coordonnées).

Un essai de vieillissement à 200 °C pendant 5 000 heures a été mené sur l'absorbeur. Au terme de cette période, aucune modification des propriétés optiques n'a été constatée. De même un maintien de 5 000 heures dans de l'eau n'altère pas ces propriétés optiques.

Exemple 2

Dans cet exemple, l'absorbeur est réalisé en tôle d'acier inoxydable Z8 C Nb 17 (norme AFNOR) de même nature que précédemment.

Le bain de traitement est une solution aqueuse d'acide sulfurique à 1,8 % en poids d'acide, additionné de 0,08 g de soufre par litre sous forme de sulfure de sodium $Na_2S$, $9H_2O$ et de 0,15 g d'alcool propargylique.

Le potentiel de corrosion naturelle de l'alliage dans un tel bain est mesuré comme précédemment, après dégraissage, et est égal à + 0,9 volt.

Le potentiel de passivation primaire dans ce bain est mesuré comme précédemment et est égal à + 0,7 volt.

Le potentiel de corrosion naturelle étant supérieur, on procède à une activation cathodique préalable de l'absorbeur pour abaisser celui-ci. On dispose l'absorbeur dans le bain relié à une source de courant de façon qu'il joue le rôle de cathode, l'autre borne de la source étant reliée à l'anode.

Le courant est amené à passer pendant une minute environ avec une densité de courant de l'ordre de 1 Ampère par décimètre carré.

On mesure ensuite à nouveau le potentiel de corrosion naturelle, qui s'est fixé à une valeur de − 0,59 volt.

Le traitement est alors effectué en maintenant l'alliage plongé dans le bain pendant 15 minutes à température ambiante en agitant le bain.

On obtient une surface d'aspect noir mat dont les facteurs d'absorption $\alpha_s$ et facteur d'émission $\varepsilon_{20}$ sont les suivants :

$$\alpha_S = 0,90 \qquad \varepsilon_{20} = 0,15$$

Cet échantillon est porté à 300 °C pendant 4 000 heures à pression ambiante. Au terme de cet essai, le facteur $\alpha_S$ est monté à 0,92 et le facteur $\varepsilon_{20}$ est demeuré inchangé. Ces résultats sont remarquables et permettent d'utiliser un tel absorbeur pour un capteur solaire appelé à travailler en rayonnements semi-concentrés à l'air ou à l'absence d'air.

Exemple 3

Dans cet exemple, l'absorbeur est réalisé en tôle d'acier inoxydable Z2 CN 18-10 (composition : chrome 18 %, nickel 10 %, carbone 0,02 % le pourcentage restant étant du fer).
La composition du bain est la suivante :
    acide sulfurique : 1,83 %
    sélénium : 0,158 g/l sous forme de sélénium dioxyde (Se $O_2$)
La mesure des potentiels donne, après dégraissage de surface et décapage dans un bain chloro-nitrique :
Potentiel de corrosion naturelle : − 0,40 volt,
Potentiel de passivation primaire : − 0,15 volt,
Le traitement est entrepris sans nécessité d'activation ; sa durée est de 30 minutes avec agitation du bain.
Les résultats obtenus sont les suivants :
    surface noire mate
    $\alpha_S = 0,90$
    $\varepsilon_{20} = 0,15$

Exemple 4

Dans cet exemple, l'absorbeur est réalisé en tôle d'acier inoxydable Z8 C Nb 17 (norme AFNOR).
Composition du bain de traitement :
    acide sulfurique : 18 % en poids,
    soufre : 0,39 g/l sous forme de thiosulfate de sodium $Na_2S_2O_3$, $5H_2O$.
    inhibiteur : méthyl-3-pentène-1-ol-3 $C_6H_{12}O$ en pourcentage de 5 g/l.
Le potentiel de corrosion naturelle mesuré a fourni une valeur égale à + 0,6 volt ; le potentiel de passivation primaire n'a pas été mesuré dans ce cas mais a été estimé du même ordre et il a paru nécessaire de procéder à une activation cathodique dans les mêmes conditions qu'à l'exemple 2.
Après activation, le potentiel de corrosion naturelle se fixe à − 0,5 volt.
Le traitement a alors été entrepris et sa durée a été de 10 minutes avec agitation du bain. Dans cet exemple, le traitement a été effectué en portant la température du bain à 30 °C.
Les propriétés optiques après ce traitement sont les suivantes :

$$\alpha_S = 0,90 \qquad \varepsilon_{20} = 0,19$$

Exemple 5

Dans cet exemple, l'absorbeur est réalisé en acier inoxydable Z8 C13 (norme AFNOR), composition 13 % chrome, 0,08 % de carbone, le pourcentage restant étant du fer.
Composition bain de traitement :
    acide sulfurique : 1,83 %
    soufre : 0,026 g/l sous forme de sulfure de sodium $Na_2S$ 9 $H_{20}$,
    alcool propargylique : 0,5 g/l
On effectue une abrasion et un polissage de la surface au papier abrasif de granulométrie 600 (nombre de grains au cm²). Les potentiels sont ensuite mesurés :
    potentiel de corrosion naturelle : − 0,6 volt,
    potentiel de passivation primaire : + 0,4 volt.
Traitement :
    durée : 10 minutes avec agitation du bain.
Résultats :

$$\alpha_S = 0,91 \qquad \varepsilon_{20} = 0,12$$

Un essai de vieillissement a été effectué dans l'eau pendant 1 000 heures. Les facteurs $\alpha_S$ et $\varepsilon_{20}$ n'ont pas sensiblement varié. On remarquera la valeur exceptionnellement basse du facteur d'émission, valeur qui subsiste en présence d'eau.

Exemple 6

Dans cet exemple, l'absorbeur est réalisé en acier inoxydable ferritique stabilisé au titane Z8 C 18 T (composition : 18 % de chrome, 0,08 % de carbone, 0,5 % de titane, le pourcentage restant étant du fer).
Composition du bain de traitement :
    acide sulfurique : 9,3 % (en poids)
    soufre : 0,77 g/l sous forme de thiosulfate hydraté,
    alcool propargylique : 1,9 g/l
Potentiels mesurés :
    potentiel de corrosion naturelle : + 0,4 volt,
    potentiel de passivation primaire : + 0,3 volt.
Le potentiel de corrosion naturelle étant supérieur, on procède à une activation cathodique préalable dans les mêmes conditions qu'à l'exemple 2.
Le potentiel de corrosion naturelle s'est alors fixé à environ − 0,5 volt.
Le traitement est alors effectué pendant 12 minutes avec agitation du bain.
Résultats :

$$\alpha_S = 0,91 \qquad \varepsilon_{20} = 0,16$$

Exemple 7

Alliage : acier inoxydable Z 8 C Nb 17
Composition du bain :
    acide sulfurique : 5,58 %
    soufre : 0,07 g/l sous forme de sulfure de sodium hydraté,
    alcool propargylique : 0,14 g/l.
Le traitement est effectué après une activation cathodique dans les mêmes conditions qu'à l'exemple 2 pour réduire le potentiel de corrosion naturelle à une valeur négative, inférieur au potentiel de passivation primaire.

Durée du traitement : 30 minutes avec agitation du bain.
Résultats :

$$\alpha_S = 0,84 \qquad \varepsilon_{20} = 0,16$$

On met ensuite la surface obtenue sous vide ($10^{-4}$ Torr) à $+ 400\,°C$ pendant 1 h 30, ce qui constitue des conditions correspondant à celles de la fabrication de capteur fonctionnnant sous vide.

Au terme de cet essai, on peut constater que le facteur $\alpha_S$ a augmenté jusqu'à une valeur de 0,90 et que le facteur $\varepsilon_{20}$ est resté inchangé.

Exemple 8

Alliage : acier inoxydable Z8 C Nb 17
Composition du bain :
    acide sulfurique : 18,3 % en poids,
    soufre : 0,1 g/l sous forme de thiosulfate de sodium,
    alcool propargylique : 7 g/l
Température 45 °C
Dans ces conditions notamment de température de bain, le potentiel de corrosion naturelle possède une valeur inférieure à celle du potentiel de passivation primaire.
Potentiel de corrosion naturelle : − 0,5 volt,
Potentiel de passivation primaire : + 0,1 volt,
Durée du traitement : 8 minutes
Résultats :

$$\alpha_S = 0,97 \qquad \varepsilon_{20} = 0,20$$

On constate que la légère augmentation de température a conduit à une valeur très élevée du facteur $\alpha_S$, le facteur $\varepsilon_{20}$ restant relativement faible.

Exemple 9

Dans cet exemple, l'absorbeur est réalisé en tôle d'acier inoxydable Z8 CT 17 (composition 17 % de chrome, 0,8 % de carbone, 0,5 % de titane).
Dans les conditions de traitement de l'exemple 8, les résultats sont les suivants :

$$\alpha_S = 0,96 \qquad \varepsilon_{20} = 0,22$$

Exemple 10

Alliage : Z8 C Nb 17
Composition du bain :
    acide sulfurique : 15 % en poids
    soufre : 0,1 g/l sous forme de thiosulfate de sodium,
    alcool : butyne 3-ol 2 3 g/l ($C_4H_6O$)
Température 45 °C
Potentiel de corrosion naturelle : − 0,5 volt,
Potentiel de passivation primaire : + 0,1 volt.

Résultats :

$$\alpha_S = 0,95 \qquad \varepsilon_{20} = 0,20$$

Il est à noter que dans les exemples 1, 2, 3, 5, 6, 7, le procédé a été mis en œuvre à la température ambiante (environ 20 °C).

**Revendications**

1. Procédé de fabrication d'un absorbeur sélectif de capteur solaire, permettant l'obtention d'une surface de captation des rayonnements solaires à facteur d'absorption élevé et à faible facteur d'émission, cette surface de captation étant en un alliage ferreux contenant à l'état allié du chrome, ledit procédé étant caractérisé en ce qu'il consiste :
    à préparer un bain acide contenant des atomes d'oxygène et sous forme dissoute au moins une substance métalloïdique à base de soufre, sélénium et/ou tellure,
    à ajuster l'état de la surface de captation de façon à conférer à son potentiel de corrosion naturelle en présence du bain précité, une valeur inférieure à son potentiel de passivation primaire, en vue de porter la surface à l'état actif,
    et à engendrer des migrations des atomes métalliques provenant de l'alliage, des migrations des atomes métalloïdiques provenant du bain et des réactions d'interface entre ces éléments, en disposant la surface de captation dans le bain précité en l'absence de courant électrique imposé à la surface de captation.

2. Procédé selon la revendication 1, caractérisé en ce que l'on ajoute au bain acide un inhibiteur de corrosion, spécifique de l'alliage et du bain contenant la substance métalloïdique.

3. Procédé selon la revendication 2, caractérisé en ce que l'inhibiteur de corrosion ajouté au bain est choisi parmi les alcools acétyléniques ou les alcools éthyléniques.

4. Procédé selon l'une des revendications 1, 2 ou 3, caractérisé en ce que l'on ajuste le potentiel de corrosion naturelle de l'alliage, en premier lieu, en effectuant une opération de mesure consistant à mesurer ce potentiel au moyen d'un circuit de mesure possédant une électrode constituée par la surface de captation et une électrode de référence plongée dans le bain, ensuite, si le potentiel de corrosion naturelle mesurée est supérieur au potentiel de passivation primaire, en effectuant une opération d'activation cathodique consistant à plonger une anode dans le bain et à faire passer un courant entre ladite anode et la surface de captation jouant alors le rôle de cathode, les opérations de mesure et d'activation cathodique précitées étant renouvelées jusqu'à l'obtention d'un potentiel de corrosion naturelle, inférieur au potentiel de passivation primaire.

5. Procédé selon la revendication 4, caractérisé en ce que l'on ajuste le potentiel de corrosion naturelle de l'alliage en réalisant préalablement une opération de décapage de la surface de captation et/ou une opération d'abrasion et/ou une opération de dégraissage, avant d'entreprendre le processus conforme à la revendication 4.

6. Procédé selon l'une des revendications 1, 2, 3, 4 ou 5, caractérisé en ce que le bain est un bain acide aqueux contenant la ou les substances métalloïdiques précitées.

7. Procédé selon l'une des revendications 1, 2, 3, 4, 5 ou 6, caractérisé en ce que la substance métalloïdique ajoutée au bain acide est un sulfure ou un thiosulfate.

8. Procédé selon l'une des revendications 1, 2, 3, 4, 5, 6 ou 7, caractérisé en ce que la substance métalloïdique ajoutée au bain acide est du sélénium dioxyde ou de l'acide sélénieux.

9. Procédé selon l'une des revendications 1, 2, 3, 4, 5, 6, 7 ou 8, caractérisé en ce que le bain acide est préparé de façon à contenir en poids au moins 0,1 % d'acide.

10. Procédé selon l'une des revendications 1, 2, 3, 4, 5, 6, 7, 8 ou 9, caractérisé en ce que la surface de captation est formée par un acier ferritique contenant du chrome, stabilisée par addition de niobium ou de titane.

11. Procédé selon l'une des revendications 1, 2, 3, 4, 5, 6, 7, 8 ou 10, caractérisé en ce que la surface de captation est formée par un acier austénitique contenant du chrome et du nickel.

## Claims

1. Process for making a selective absorber for solar collectors, enabling a collector surface for solar radiations to be obtained, having a high absorption factor and a low emission factor, this collector surface being made of a ferrous alloy containing chromium in alloyed form, said process being characterised in that it consists in

preparing an oxygenous acid bath containing, in the dissolved state, at least one metalloid substance based on sulphur, selenium and/or tellurium ;

adjusting the state of the collector surface so as to take its natural corrosion potential in the presence of the above-mentioned bath to a value below ist primary passivation potential, with a view to bringing the surface to the active state ; and

creating migration of the metal atoms originating from the alloy, migration of the metalloid atoms originating from the bath and interface reactions between these elements by placing the collector surface in the above-mentioned bath in the absence of any electric current applied to the collector surface.

2. Process according to Claim 1, characterised in that a corrosion inhibitor, specific for the alloy and for the bath containing the metalloid substance, is added to the acid bath.

3. Process according to Claim 2, characterised in that the corrosion inhibitor, added to the bath, is selected from among acetylenic alcohols or ethylenic alcohols.

4. Process according to one of the Claims 1, 2 or 3, characterised in that the natural corrosion potential of the alloy is first adjusted by carrying out a measuring operation, consisting in measuring that potential by means of a measuring circuit comprising an electrode consisting of the collector surface and a reference electrode immersed in the bath, and then, if the natural corrosion potential measured is higher than the primary passivation potential, carrying out a cathodic activation operation, consisting in immersing an anode in the bath and passing a current between said anode and the collector surface, which now plays the part of a cathode, the above-mentioned measuring and cathodic activation operations being repeated until a natural corrosion potential is obtained that is lower than the primary passivation potential.

5. Process according to Claim 4, characterised in that the natural corrosion potential of the alloy is adjusted by giving, at first, a pickling treatment to the collector surface and/or an abrasion treatment and/or a degreasing treatment, before starting on the process in accordance with Claim 4.

6. Process according to one of the Claims 1, 2, 3, 4 or 5, characterised in that the bath is an aqueous acid bath containing the above-mentioned metalloid substance or substances.

7. Process according to one of the Claims 1, 2, 3, 4, 5 or 6, characterised in that the metalloid substance, added to the acid bath, is a sulphide or a thiosulphate.

8. Process according to one of the Claims 1, 2, 3, 4, 5, 6 or 7, characterised in that the metalloid substance, added to the acide bath, is selenium dioxide or selenious acid.

9. Process according to one of the Claims 1, 2, 3, 4, 5, 6, 7 or 8, characterised in that the acid bath is prepared so as to contain at least 0,1 % by weight of acid.

10. Process according to one of the Claims 1, 2, 3, 4, 5, 6, 7, 8 or 9, characterised in that the collector surface is formed by a chromium-containing ferritic steel, stabilised by addition of niobium or titanium.

11. Process according to one of the Claims 1, 2, 3, 4, 5, 6, 7, 8 or 10, characterised in that the collector surface is formed by an austenitic steel containing chromium and nickel.

## Patentansprüche

1. Verfahren zur Herstellung eines selektiv absorbierenden Gegenstandes für Sonnenkollektoren, welches es ermöglicht, eine Kollektoren-Oberfläche für Sonnenstrahlungen mit hohen Absorptionsfaktor und geringem Emissionsfaktor zu erhalten, wobei diese Kollektoren-Oberfläche aus einer einlegiertes Chrom enthaltenden Eisenlegierung besteht und wobei besagtes Verfahren dadurch gekennzeichnet ist, dass es darin besteht, dass man

ein sauerstoffatomhaltiges Säurebad herstellt, welches in gelöster Form mindestens einen auf Schwefel, Selen und/oder Tellur basierenden Stoff enthält,

den Zustand der Kollektoren-Oberfläche derart einstellt, dass sein natürliches Korrosionspotential in Gegenwart des vorgenannten Bades auf einen unter dem primären Passivierungspotential liegenden Wert gebracht wird, um die Oberfläche in den aktiven Zustand zu überführen, und

Wanderungen der aus der Legierung stammenden Metallatome, Wanderungen der aus dem Bad stammenden Metalloidatome und Grenzflächenreaktionen zwischen diesen Elementen dadurch hervorruft, dass man die Kollektoren-Oberfläche im vorgenannten Bad in Abwesenheit von an die Kollektoren-Oberfläche angelegtem Strom anordnet.

2. Verfahren nach Anspruch 1, dadurch gekennzeichnet, dass man dem Säurebad ein für die Legierung und für das den metalloiden Stoff enthaltende Bad spezifisches Korrosionshemmungsmittel zusetzt.

3. Verfahren nach Anspruch 2, dadurch gekennzeichnet, dass das dem Bad zugesetzte Korrosionshemmungsmittel unter den acetylenischen Alkoholen oder den äthylenischen Alkoholen ausgewählt wird.

4. Verfahren nach einem der Ansprüche 1, 2 oder 3, dadurch gekennzeichnet, dass man zuerst das natürliche Korrosionspotential der Legierung dadurch einstellt, dass man einen Messungs-Arbeitsgang durchführt, welcher darin besteht, dass man dieses Potential mittels eines eine aus der Kollektoren-Oberfläche bestehende Elektrode und eine in das Bad eingetauchte Bezugselektrode aufweisenden Mess-Stromkreises misst, und dann, falls das gemessene natürliche Korrosionspotential über dem primären Passivierungspotential liegt, man einen kathodischen Aktivierungs-Arbeitsgang durchführt, welcher darin besteht, dass man eine Anode in das Bad eintaucht und einen Strom zwischen besagte Anode und die Kollektoren-Oberfläche, welche nun die Kathoden-Rolle spielt, leitet, wobei die vorgenannten Messungs- und kathodischen Aktivierungs-Arbeitsgänge wiederholt werden, bis ein unter dem primären Passivierungspotential liegendes natürliches Korrosionspotential erhalten wird.

5. Verfahren nach Anspruch 4, dadurch gekennzeichnet, dass man das natürliche Korrosionspotential der Legierung dadurch einstellt, dass man zuvor die Kollektoren-Oberfläche eine Beizbehandlung unterzieht und/oder einen Abreibungs-Arbeitsgang und/oder einen Entfettungs-Arbeitsgang durchführt, ehe man das Verfahren gemäss Anspruch 4 beginnt.

6. Verfahren nach einem der Ansprüche 1, 2, 3, 4 oder 5, dadurch gekennzeichnet, dass es sich bei dem Bad um ein wässriges Säureband handelt, welches den oder die vorgenannten metalloiden Stoff oder Stoffe enthält.

7. Verfahren nach einem der Ansprüche 1, 2, 3, 4, 5 oder 6, dadurch gekennzeichnet, dass der dem Säurebad zugesetzte metalloide Stoff ein Sulfid oder ein Thiosulfat ist.

8. Verfahren nach einem der Ansprüche 1, 2, 3, 4, 5, 6 oder 7, dadurch gekennzeichnet, dass der dem Säurebad zugesetzte metalloide Stoff Selendioxyd oder selenige Säure ist.

9. Verfahren nach einem der Ansprüche 1, 2, 3, 4, 5, 6, 7 oder 8, dadurch gekennzeichnet, dass das Säurebad derart hergestellt wird, dass es mindestens 0,1 Gew.-% Säure enthält.

10. Verfahren nach einem der Ansprüche 1, 2, 3, 4, 5, 6, 7, 8 oder 9, dadurch gekennzeichnet, dass die Kollektoren-Oberfläche durch einen chromhaltigen ferritischen Stahl gebildet wird, welcher durch Zusatz von Niob oder Titan stabilisiert ist.

11. Verfahren nach einem der Ansprüche 1, 2, 3, 4, 5, 6, 7, 8 oder 10, dadurch gekennzeichnet, dass die Kollektoren-Oberfläche durch einen chrom- und nickelhaltigen austenitischen Stahl gebildet wird.